# EUROPEAN PATENT APPLICATION

(11) **EP 2 741 114 A1**
(43) Date of publication of application: **11.06.2014**
(21) Application number: 13180761.2
(22) Date of filing: 16.08.2013
(51) Int. Cl.: G02B 6/38, H05K 7/14, H01R 12/70

(54) **Mounting assembly for optical fiber flange**

(30) Priority: 04.12.2012 CN 201210512103
(71) Applicant: Sercomm Corporation, Taipei 115 (TW)
(72) Inventor: Weng, Shi-Jun, Jiangsu (CN); Long, Gao-Feng, Jiangsu (CN)
(74) Representative: Von Kreisler Selting Werner - Partnerschaft von Patentanwälten und Rechtsanwälten mbB

(57) **Abstract**

A mounting assembly for an optical fiber flange is provided. The mounting assembly includes a U-shaped mounting section. The mounting section includes two parallel vertical rods (11), and a crossbeam (14) connecting first free ends (12) of the two vertical rods. At least one of the vertical rods has a connection hole (22) along a length direction thereof. The mounting assembly is characterized in that, the mounting assembly is an integral formed from ABS, PC or a mixture of ABS/PC through injection molding. The present invention features the following advantages. The mounting assembly is an integral made of a plastic material, which not only reduces metal usage and saves resource costs, but also lowers processing complications and production costs. Further, the mounting assembly of the present invention can be fixed using only two screws, thus keeping accessory usage and an installation procedure simple for enhancing production efficiency.

## Description

### BACKGROUND OF THE INVENTION

### Field of the Invention

The invention relates in general to a mounting assembly for an optical fiber flange, and more particularly to a mounting assembly for mounting an optical fiber flange onto a printed circuit board (PCB).

### Description of the Related Art

An optical fiber flange, also referred to as an optical fiber adapter, is a crucial part for jointly connecting between optical fibers. In a common optical fiber flange, outwardly folded sides at opening edges of two tubular optical fiber connectors, having quadrilateral cross-sections, are arranged facing each other and connected to each other, so as to connect two optical fibers. When applying an optical fiber flange to an optical fiber system, the optical fiber flange is usually mounted onto a printed circuit board (PCB). Not only the stability of the optical fiber flange is critical in the entire system, but also the optical fiber flange needs to have a stable structure and a good plugging ability for long-term repeated use. In addition to the above requirements, the optical fiber flange needs to further meet reduced costs. A metal assembly adopted by a conventional mounting assembly for mounting an optical fiber flange onto a PCB includes two vertical rods disposed at two sides of the optical fiber flange and a crossbeam connecting the vertical rods. As such, the mounting assembly forms an inverted U shape to fix the optical fiber flange on the PCB. The vertical rods are parallel to the folded sides of the optical fiber flange. Free ends of the vertical rods are bent by 90 degrees, and are fixed onto the PCB at front sections thereof by using screws. The outwardly folded sides of the optical fiber flange are further fixed in a horizontal direction to middle sections of the vertical rods by using screws. The mounting assembly of the above structure is capable of restraining movements of the optical fiber flange in front and back, left and right, and up and down directions, thereby steadily mounting the optical fiber flange. The mounting assembly is made of metal, and needs at least four screws for fastening (two screws are used for mounting the mounting assembly onto the PCB, and the other two screws are used for fixing the optical fiber flange) that adds complications to an installation procedure. Further, in the mounting assembly, holes used for fastening with the screws need to be provided with inner screw threads, which are more complex in processing and higher in cost. In an extremely competitive market environment, even minute savings can be contributive in reducing costs, enhancing product competitiveness and saving resources for environmental-friendliness.

### SUMMARY OF THE INVENTION

The invention is directed to a mounting assembly for an optical fiber flange for further saving resources and reducing costs under the premise of ensuring the stability of the optical fiber flange.

A mounting assembly for an optical fiber flange is provided in the present invention. The mounting assembly comprises a U-shaped mounting section. The mounting section comprises two parallel vertical rods and a crossbeam connecting first free ends of the vertical rods, with at least one of the vertical rods being disposed with a connection hole along a length direction thereof. The mounting assembly is **characterized in that**, the mounting assembly for the optical fiber flange is an integral formed by acrylonitrile butadiene styrene (ABS), polycarbonate (PC) or a PC/ABS mixture through injection molding.

Compared to a conventional mounting assembly, the mounting assembly for an optical fiber flange of the present invention features the advantages below.

First of all, the mounting assembly of the present invention is made of a plastic material, so that metal usage is reduced to save resources and to lower costs. Secondly, the mounting assembly of the present invention is an integral, which lowers processing complications and production costs. Further, the mounting assembly of the present invention can be fixed using only two screws. Thus, accessory usage and an installation procedure are kept simple to enhance production efficiency.

The above and other aspects of the invention will become better understood with regard to the following detailed description of the preferred but non-limiting embodiments. The following description is made with reference to the accompanying drawings.

### BRIEF DESCRIPTION OF THE DRAWINGS

FIG. 1 is a schematic diagram according to an embodiment of the present invention.

FIG. 2 is an exploded view of FIG. 1.

FIG. 3 is a bottom view of a mounting assembly for an optical fiber flange according to an embodiment of the present invention.

### DETAILED DESCRIPTION OF THE INVENTION

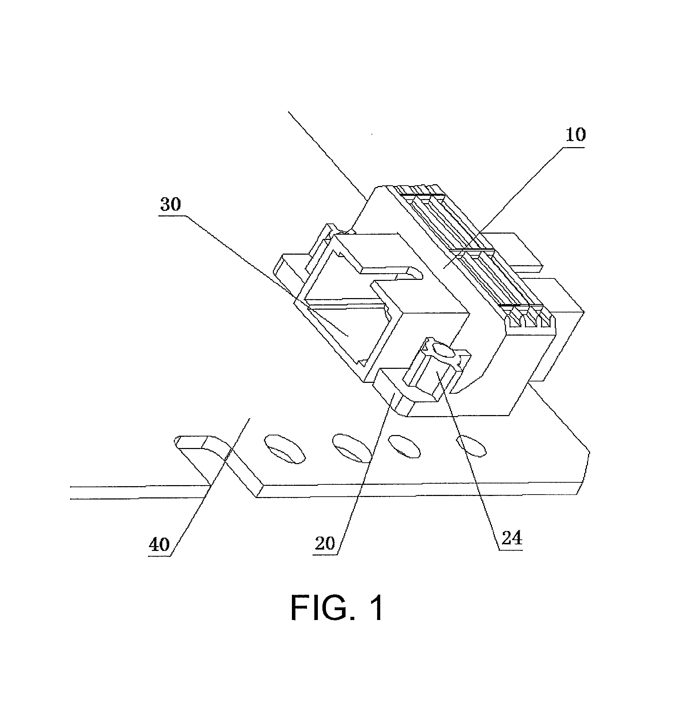

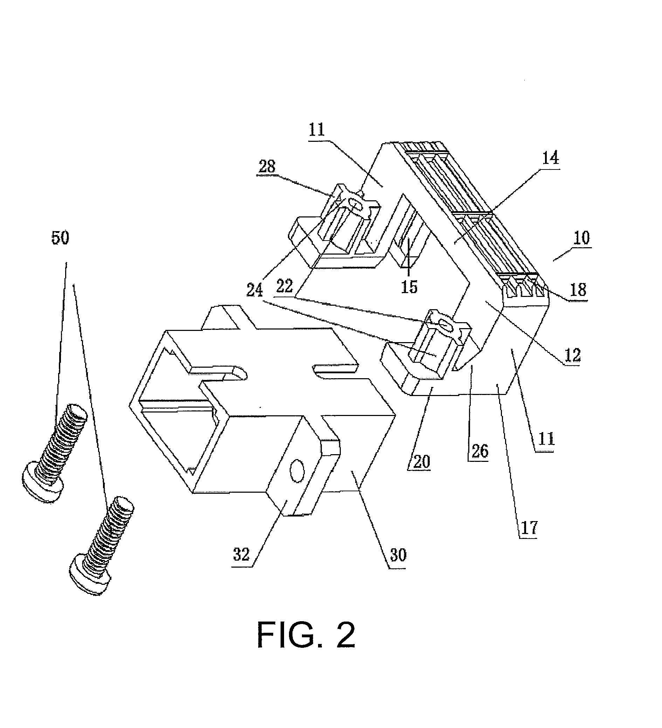

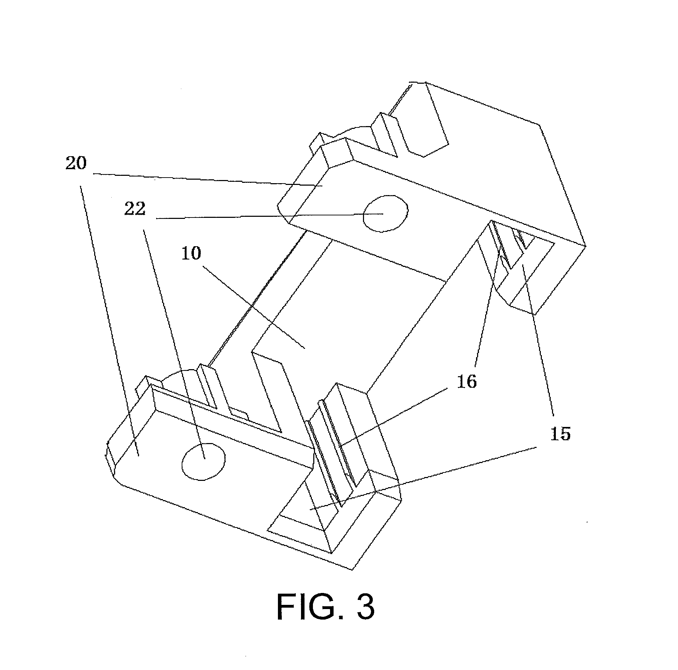

Referring to FIGS. 1 to 3, according to an embodiment of the present invention, a mounting assembly for an optical fiber flange is an integral formed by a common plastic material such as acrylonitrile butadiene styrene (ABS), polycarbonate (PC) or a PC/ABS mixture through injection molding. The above materials are readily accessible with a simple processing procedure. Compared to metal materials, the above plastic materials feature advantages of reduced usage of metal materials, reduced manufacturing costs, enhanced production efficiency and lowered costs. The mounting assembly for an optical fiber flange comprises a mounting section 10. The mounting section 10 comprises two parallel vertical rods 11, and a crossbeam 14 connecting first free ends 12 of the two vertical rods 11. As such, the mounting section 10 forms a U-shaped structure for enveloping an optical fiber flange 30. At the two vertical rods 11, sliding grooves 15 are provided at sidewalls facing each other. An inner wall of each of the sliding grooves 15 may be further provided with a plurality of fixing ribs 16 extended along a length direction of the sliding grooves 15 and protruding from the inner wall of each of the sliding grooves 15. Starting ends of the fixing ribs 16 are arched, so as to guide folded sides 32 of the optical fiber flange 30 to slide into the sliding grooves 15 and to form interfering fitting for enhancing the stability of the optical fiber flange 30.

Each of second free ends 17 of the two vertical rods 11 is vertically disposed with a connection section 20. The two connection sections 20 may be disposed at the same side or different sides, depending on a space allocation requirement of a PCB 40. Lower surfaces of the connection sections 20 are aligned with end faces of the vertical rods 11, so as to contact with the PCB 40 and to form steady contact planes. Each connection section 20 is provided with one or more connection holes 22 for allowing screws or screw bolts to pass through and to become fixed with the PCB 40. For example, a cylindrical fixing column 24 is formed on each connection section 20, and the connection hole 22 is designed as an unthreaded hole penetrating the fixing column 24 along a length direction of the fixing column 24, in a way that a screw 50 may penetrate through the PCB 40 and screw into the unthreaded hole to form a stable connection. The connection hole 22 may be a through hole or a blind hole, and may be an unthreaded hole or a threaded hole according to required fastening means. For structural reinforcement, a triangular stiffener rib 26 may be further provided between the connection section 20 and the vertical rod 11. A plurality of reinforcement pillars 28 connecting to the fixing column 24 may be provided around an outer periphery of the fixing column 24, with the reinforcement pillars 28 forming crosses around the fixing column 24. Reinforcement ribs 18 may be provided at an upper surface of the crossbeam 14, with the reinforcement ribs 18 being in a lattice arrangement and protruding from the upper surface.

With the above structure, the optical fiber flange 30 may be securely clamped within inner sides of the U-shaped mounting assembly 10. The folded sides 32 are fastened into the sliding grooves 15, and the connection sections 20 are mounted onto the PCB 40 by screwing two screws into the connection holes 22. Thus, movements of the optical fiber flange 30 in top and down, left and right, and front and back directions are restrained to achieve stable mounting.

A deformed structure as a variation from the above structure is further provided according to another embodiment of the present invention. More specifically, while keeping remaining structural features unchanged, the sliding grooves penetrate through the vertical rods to form through grooves, and the folding sides of the optical fiber flange are embedded into the sliding grooves, thereby also achieving the object of the present invention. It can be easily appreciated, although not further depicted, modifications and variations inspired from the disclosed embodiments can be made by a person having ordinary skill in the art, and are encompassed within the scope of the present invention.

While the invention has been described by way of example and in terms of the embodiments, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A mounting assembly for an optical fiber flange, comprising a U-shaped mounting section, the mounting section comprising two parallel vertical rods and a crossbeam connecting first free ends of the two vertical rods; the mounting assembly being **characterized in that**:
at least one of the vertical rods is provided with a connection hole along a length direction of thereof; and
the mounting assembly is an integral formed by acrylonitrile butadiene styrene (ABS), polycarbonate (PC) or a PC/ABS mixture through injection molding.

2. The mounting assembly according to claim 1, being **characterized in that**, at the vertical rods, inner sidewalls facing each other are disposed with sliding grooves along the length direction of the vertical rods.

3. The mounting assembly according to claim 1 or 2, being **characterized in that**, an inner wall of each of the sliding grooves is provided with a plurality of fixing ribs extended along a length direction of the sliding grooves and protruding from the inner wall of each of the sliding grooves.

4. The mounting assembly according to claim 2, being **characterized in that**, the sliding grooves are shallow grooves or through grooves penetrating the sidewalls of the vertical rods.

5. The mounting assembly according to claim 1, being **characterized in that**, a second free end of at least one of the vertical rods is provided with a vertical connection section extending outwards, and the connection section is provided with at least one connection hole.

6. The mounting assembly according to claim 5, being **characterized in that**, a fixing column is disposed at the connection section along the length direction of the vertical rods, and is provided with the connection hole.

7. The mounting assembly according to claim 6, being **characterized in that**, a plurality of reinforcement pillars are disposed around an outer periphery of the fixing column.

8. The mounting assembly according to claim 7, being **characterized in that**, a stiffener rib is provided between the connection section and the vertical rod.

9. The mounting assembly according to claim 1, being **characterized in that**, a plurality of reinforcement ribs in a lattice arrangement are disposed on an outer surface of the crossbeam.
